Europäisches Patentamt

European Patent Office

Office européen des brevets

(11) Numéro de publication: **0 438 950 A1**

## (12) DEMANDE DE BREVET EUROPEEN

(21) Numéro de dépôt: 90440082.7

(22) Date de dépôt: 17.09.90

(51) Int. Cl.⁵: **E05B 65/16, E05B 67/36**

(30) Priorité: 22.01.90 FR 9000827

(43) Date de publication de la demande:
**31.07.91 Bulletin 91/31**

(84) Etats contractants désignés:
**AT BE CH DE DK ES GB GR IT LI LU NL SE**

(71) Demandeur: **Fortin, Jean**
**480 rue de Verdun**
**F-76600 Le Havre(FR)**

(72) Inventeur: **Fortin, Jean**
**480 rue de Verdun**
**F-76600 Le Havre(FR)**

(74) Mandataire: **Arbousse-Bastide, Jean-Claude**
**Philippe**
**CABINET ARBOUSSE BASTIDE 20, rue de**
**Copenhague**
**F-67000 Strasbourg(FR)**

(54) **Dispositif de verrouillage, notamment pour portes de conteneurs.**

(57) Dispositif de verrouillage destiné à rendre solidaires deux éléments tels que les battants d'une porte de conteneur.

Il comporte un axe (1) dont la section présente la forme d'un cylindre aplati destiné à assembler deux pièces (2) et (3) solidaires chacune d'une des parties à verrouiller, et comportant chacune au moins deux bagues qui présentent, vues de dessus ou de dessous, une forme trapézoïdale, les bagues (31, 32, 33) de la pièce (3) présentant chacune un évidement (31', 32', 33') dont la forme est identique à celle de l'axe (1), tandis que les bagues (22, 23) présentent chacune un évidement (22', 23') de même forme que l'axe (1) mais de dimensions sensiblement supérieures, une serrure (11) disposée à l'extrémité de l'axe (1) permettant d'en faire sortir latéralement, à travers des lumières (13, 13'), deux linguets (12, 12') qui viennent se loger dans deux logements ménagés dans les bagues (32, 33) de la pièce (3).

Fig 1

## DISPOSITIF DE VERROUILLAGE, NOTAMMENT POUR PORTES DE CONTENEURS.

La présente invention a pour objet un dispositif de verrouillage destiné à rendre solidaires deux éléments tels que les battants d'une porte de conteneur.

En vue de prévenir les vols par effraction, il importe que les camions ou les conteneurs soient munis de fermetures de sûreté solides et efficaces. Divers dispositifs ont été proposés à cette fin, notamment celui qui fait l'objet de la demande de brevet FR 88 17 265, dans lequel une poutre est disposée devant les portes du conteneur, étant ancrée à ses extrémités dans des coins positionnés de part et d'autre du conteneur, l'un des ancrages étant solidaire d'un système de serrage et de verrouillage.

Ce dispositif présente toutefois l'inconvénient de déborder l'encombrement normal du conteneur, en sorte qu'il est difficilement utilisable pour des conteneurs destinés à être arrimés dans un navire.

La présente invention a pour but de pallier cet inconvénient en proposant un dispositif de verrouillage qui reste dans les limites d'encombrement du conteneur tout en assurant une sécurité d'emploi due à sa solidité et à sa facilité de mise en oeuvre, même en cas de déformation des portes dudit conteneur.

La présente invention a ainsi pour objet un dispositif de verrouillage destiné à rendre solidaires deux éléments tels que les deux battants d'une porte de conteneur, ledit dispositif comportant un axe passant dans deux séries de bagues solidaires chacune d'une des parties à verrouiller, les deux séries de bagues étant alternativement fixées à l'une et à l'autre desdites parties, et l'axe cylindrique étant muni en bout d'une fermeture de sécurité manoeuvrable à l'aide d'une clé et permettant de faire sortir latéralement de l'axe un linguet venant se placer dans un évidement ménagé dans l'une des bagues à un endroit inaccessible de l'extérieur lorsque le verrouillage est effectué.

Les bagues du dispositif selon l'invention font partie de deux pièces qui peuvent être soudées directement sur chacune des parties à verrouiller, mais qui peuvent aussi être soudées sur deux éléments destinés à être ensuite solidarisés auxdites parties.

Conformément à l'invention, les bagues du dispositif de verrouillage présentent, vues de dessus et de dessous, une forme trapézoïdale, délimitant un espace creux dont la section présente la forme d'un cylindre aplati, le dispositif se compose de deux pièces dont la première comporte au moins trois bagues de ce type et la seconde au moins deux bagues aptes à s'insérer exactement dans les espaces délimités par les premières, l'axe destiné à réaliser l'assemblage des deux pièces présentant une forme telle qu'il puisse être introduit sans jeu dans l'espace creux délimité par les premières bagues, les bagues de la seconde pièce délimitant chacune un espace légèrement plus grand.

Ainsi, du fait de ses caractéristiques ci-dessus exposées, le dispositif selon l'invention présente l'avantage de pouvoir donner lieu à une mise en oeuvre aisée même dans le cas où un jeu existe entre les deux pièces destinées à être assemblées au moyen de l'axe : on sait en effet que le chargement d'un conteneur donne fréquemment lieu à des difficultés de fermeture de ses portes, cause de légères déformations de son cadre arrière qui résultent en un décalage plus ou moins accentué des bagues.

La forme trapézoïdale des bagues du dispositif selon l'invention offre l'avantage d'autoriser leur emboîtement même si les deux pièces en regard sont légèrement décalées l'une par rapport à l'autre, l'espace plus grand délimité par les bagues de la seconde pièce autorisant l'introduction de l'axe assemblant les deux pièces.

Selon une variante du dispositif selon l'invention, ce dernier comporte une troisième pièce constituée d'une plaque de tôle portant approximativement au milieu d'une de ses faces une bague de la forme décrite ci-dessus, la seconde pièce porteuse d'au moins deux bagues demeurant inchangée tandis que la première pièce présente une découpe en forme de trapèze apte à accueillir d'une part les deux bagues de l'autre pièce et d'autre part la bague solidarisée à la plaque de tôle.

Dans ce cas, la plaque de tôle sert en outre à bloquer les leviers de commande des barres verticales actionnant les loquets disposés en haut et en bas du cadre du conteneur, constituant une sécurité supplémentaire.

La présente invention sera mieux comprise à la lecture de la description qui suit et qui se réfère au dessin annexé, étant bien entendu que cette description ne présente aucun caractère limitatif vis-à-vis de l'invention.

Dans le dessin annexe :
- la figure 1 représente une vue en perspective d'un premier mode de réalisation d'un dispositif de verrouillage selon l'invention ;
- la figure 2 représente une vue de dessus du dispositif de la figure 1 ;
- la figure 3 représente une vue en perspective d'un second mode de réalisation d'un dispositif de verrouillage selon l'invention.

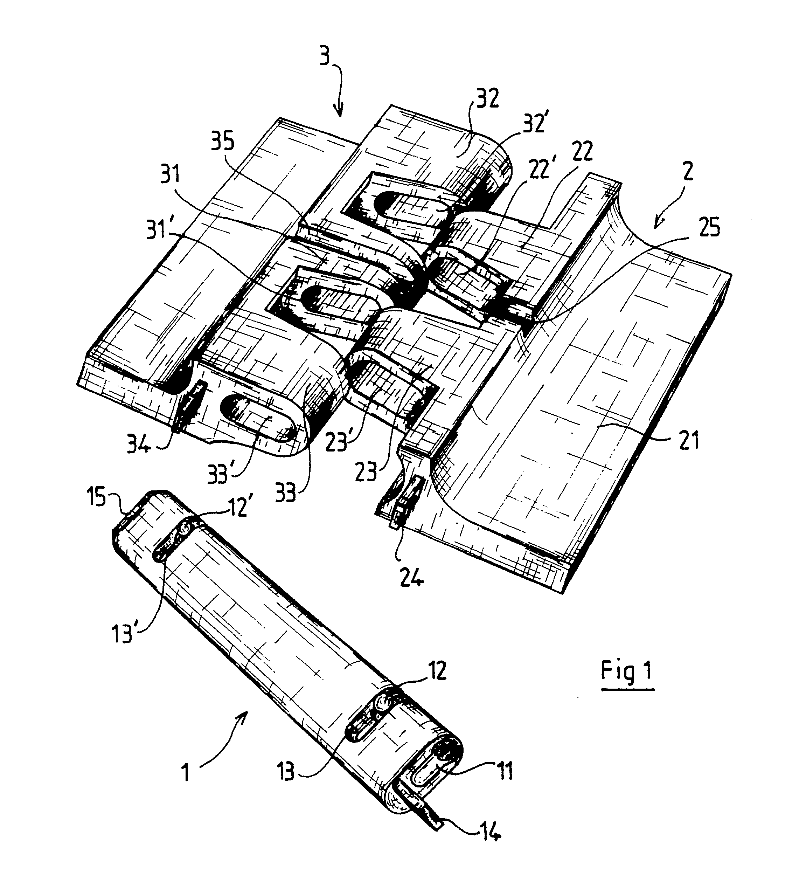

Si on se réfère d'abord à la figure 1, on voit que le dispositif de verrouillage selon l'invention se compose de trois éléments, à savoir un axe 1 et deux pièces 2 et 3 destinées à être assemblées.

La pièce 2 comprend un socle 21 prolongé sur l'un de ses côtés par deux bagues 22 et 23 de forme trapézoïdale, séparées par un espace qui permet l'insertion d'un bague de même forme, en l'occurence la bague centrale 31 de la pièce 3, ladite bague centrale 3l de ladite pièce 3 étant encadrée par deux bagues 32 et 33, les deux espaces ainsi délimités permettant l'insertion des bagues 22 et 23 de la pièce 1.

Les bagues 31, 32 et 33 délimitent chacune un évidement 31', 32', 33' dont la forme et les dimensions sont adaptées à recevoir l'axe 1, dont la section présente la forme d'un cylindre aplati, et plus précisément d'un rectangle prolongé à ses deux extrémités par deux demi-cercles, et qui comporte à l'une de ses extrémités une serrure 11 destinée à actionner deux linguets 12 et 12' de manière à les faire sortir latéralement de l'axe 1 par des lumières 13 et 13' ménagées dans ledit axe 1 en vue de se loger dans deux évidements (non visibles sur cette figure) ménagés dans les bagues 32 et 33.

Les bagues 22 et 23, de leur côté, délimitent chacune un évidement 22', 23' dont la forme est la même que celle de l'axe 1 mais dont les dimensions sont sensiblement supérieures.

Les trois pièces 1, 2, 3 du verrou comportent en outre chacune, à leur extrémité inférieure, une patte 14, 24, 34 munie d'un perçage permettant de les réunir au moyen d'un câble qui peut faire partie d'un scellé de douane.

On comprend clairement, à l'examen de la figure 1, les avantages qu'offre le verrou qui s'y trouve représenté. En effet, une fois le conteneur chargé, la fermeture de ses portes amène les pièces 1 et 2 à s'interpénétrer, les bagues 22 et 23 de la pièce 2 venant se positionner dans les espaces délimités par les bagues 31, 32, 33 de la pièce 3.

Du fait des dimensions légèrement supérieures des évidements 22', 23' des bagues 22 et 23, l'axe 1 pourra être introduit dans l'espace formé par la juxtaposition des cinq bagues, même si une quelconque déformation du cadre du conteneur empêche les bagues 22 et 23 de se positionner exactement dans les espaces qui leur sont destinés.

Par ailleurs, la forme particulière de l'axe 1 empêche sa rotation dans les bagues une fois qu'il est mis en place, facilitant de ce fait son positionnement et l'actionnement des linguets 12 et 12' à l'aide de la serrure 11.

Un chanfrein 15 ménagé à l'extrémité de l'axe 1 opposée à la serrure 11 facilite d'autre part son introduction dans l'espace délimité par l'ensemble des évidements des bagues 22, 23, 31, 32, 33.

Enfin, une rainure 35 ménagée au milieu de la bague médiane 31 de la pièce 3 en regard d'une rainure 25 ménagée dans le socle 21 de la pièce 2 permet, si besoin est, de resserrer, à l'aide de vis non représentées, la bague 31 et/ou de rapprocher légèrement les bagues 22 et 23, ce qui peut être nécessité par un déformation plus importante du cadre du conteneur.

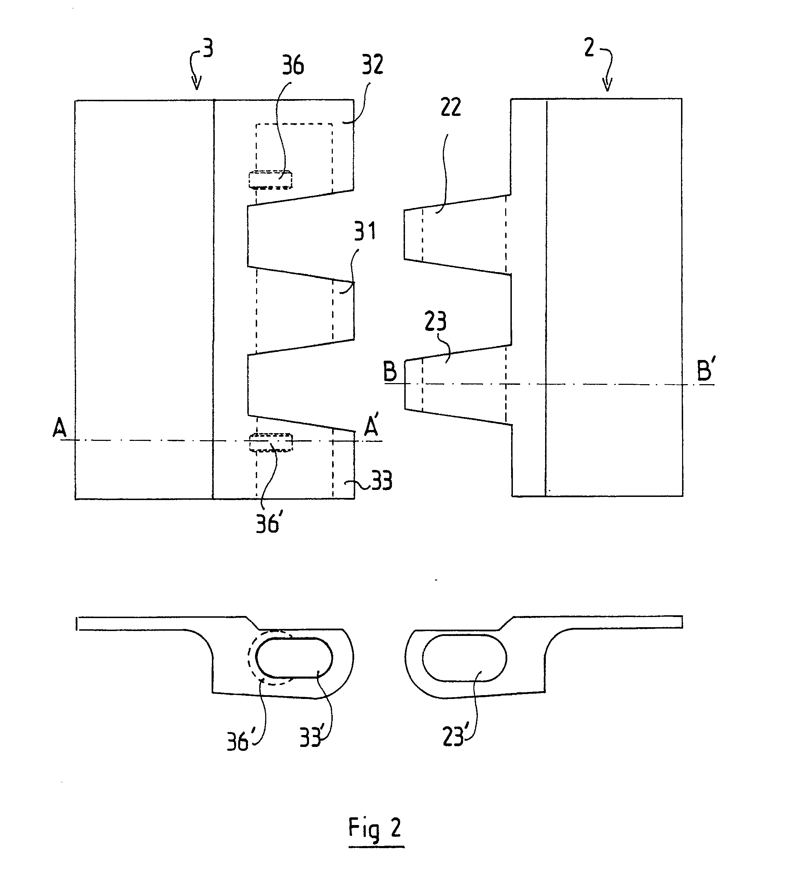

Si on se réfère maintenant à la figure 2, on retrouve sur cette figure les éléments de la figure 1, à savoir les pièces 2 et 3 avec leurs bagues 22, 23 respectivement 31, 32, 33, ainsi que les deux logements 36, 36' ménagés dans les bagues 32, respectivement 33, pour recevoir les linguets 12 et 12' de l'axe 1.

Les vues en coupe selon les lignes AA' et BB' mettent en évidence la différence de dimensions existant entre l'évidement 23' des bagues 22 et 23 et celui 33' des bagues 31, 32 et 33, ce dernier comportant par ailleurs le logement 36' destiné à recevoir le linguet 12.

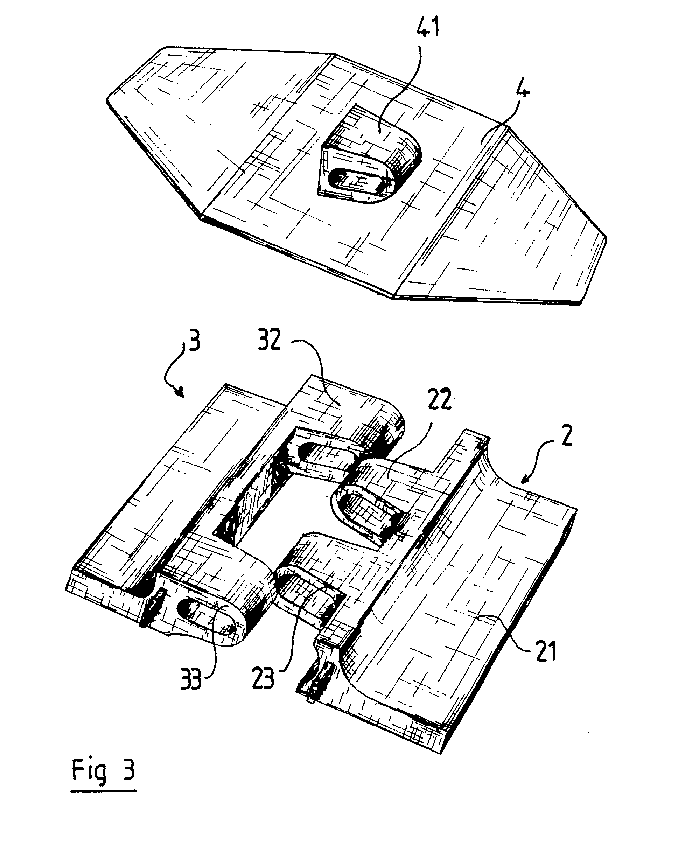

Si on se réfère enfin à la figure 3, on voit sur cette figure une autre variante du verrou de sûreté selon l'invention. Dans cette variante, la pièce 2 reste identique à celle de la figure 1, mais la pièce 3 ne comporte plus que deux bagues 32 et 33 délimitant un espace trapézoïdal destiné à accueillir d'une part les deux bagues 22 et 23 et d'autre part une bague 41, de même forme et de mêmes dimensions que la bague 31 de la figure 1, solidaire d'une plaque de tôle 4, qui déborde largement, bilatéralement, les pièces 2 et 3.

Ce mode de réalisation présente l'avantage, déjà exposé, de permettre le blocage des leviers de commande des barres verticales du conteneur, lesdits leviers de commande étant positionnés de part et d'autre et à proximité des pièces 2 et 3.

**Revendications**

1. Dispositif de verrouillage destiné à rendre solidaires deux éléments tels que les battants d'une porte de conteneur, caractérisé en ce qu'il comporte un axe (1) dont la section présente la forme d'un rectangle prolongé à ses deux extrémités par deux demi-cercles, ledit axe (1) étant destiné à assembler deux pièces (2) et (3) solidaires chacune d'une des parties à verrouiller, et comportant chacune des bagues qui présentent, vues de dessus ou de dessous, une forme trapézoïdale, la pièce (2) comportant au moins deux bagues (22, 23) séparées par un espace dans lequel peut s'insérer la bague médiane (31) de la pièce (3), laquelle comporte au moins trois bagues (31, 32, 33) délimitant des espaces dans lesquels peuvent s'insérer les bagues (22, 23) de la pièce (2), les bagues (31, 32, 33) de la pièce (3) présentant chacune un évidement (31', 32', 33') dont la forme est identique à celle de l'axe (1) et dont les dimensions sont adaptées à recevoir ledit axe (1), tandis que les bagues (22, 23) présentent chacune un évidement (22', 23') de même forme que l'axe (1) mais de dimensions sensiblement supérieures, une serrure (11) disposée à l'extrémité de l'axe (1) permettant d'en faire sortir latéralement, à travers des lumières (13, 13'), deux linguets (12, 12') destinés à venir se loger dans deux logements (36, 36') ménagés dans les bagues (32, 33) de la pièce (3).

2. Dispositif de verrouillage selon la revendication 1, caractérisé en ce que la bague médiane (31) de la pièce (3) présente une rainure (35) destinée à permettre le resserrement de la bague (31) au moyen de vis et positionnée en regard d'une rainure (25) ménagée dans le socle (21) de la pièce (2) et destinée à permettre le rapprochement des bagues (22, 23) au moyen de vis.

3. Dispositif de verrouillage selon la revendication 1, caractérisé en ce qu'il comporte en outre une plaque de tôle (4) sur laquelle est soudée une bague (41) identique par sa forme et ses dimensions à la bague (31), la pièce (3) ne comportant plus en ce cas de bague (31), et l'axe (1) étant alors mis en place après que les bagues des pièces (2), (3) et (4) aient été juxtaposées axialement, la plaque (4) débordant largement, bilatéralement, les pièces (2) et (3).

Fig 1

Fig 2

Fig 3

**Office européen
des brevets**

Numéro de la demande

# RAPPORT DE RECHERCHE
# EUROPEENNE

**EP 90 44 0082**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 464 241   (J.F. WELLEKENS)<br>* le document en entier *<br>— — — — — | 1 | E 05<br>B 65/16<br>E 05 B 67/36 |

|  |  |  | **DOMAINES TECHNIQUES RECHERCHES (Int. Cl.5)** |
|---|---|---|---|
|  |  |  | B 62 D<br>B 60 D<br>B 65 D<br>E<br>05 B |

Le présent rapport de recherche a été établi pour toutes les revendications

| Lieu de la recherche | Date d'achèvement de la recherche | Examinateur |
|---|---|---|
| Berlin | 08 février 91 | KRABEL A.W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

-------------------------------------------------

& : membre de la même famille, document correspondant